# EUROPÄISCHE PATENTSCHRIFT

(11) **EP 2 148 746 B1**
(45) Veröffentlichungstag und Bekanntmachung des Hinweises auf die Patenterteilung: **28.08.2013**
(21) Anmeldenummer: 08736532.6
(22) Anmeldetag: 24.04.2008
(51) Int. Cl.: B44F 9/02, B44F 9/04, B32B 37/24, B32B 38/14, B05D 1/28, B05D 1/40, E04F 13/00, E04F 15/00, B32B 38/06

(54) **VERFAHREN UND VORRICHTUNG ZUR BESCHICHTUNG EINES PLATTENFÖRMIGEN WERKSTÜCKS MIT EINEM FLIESSFÄHIGEN MEDIUM**
METHOD AND DEVICE FOR COATING A PLATELIKE WORKPIECE WITH A FLOWING MEDIUM
PROCÉDÉ ET DISPOSITIF DE REVÊTEMENT D'UNE PIÈCE PLATE AVEC UNE SUBSTANCE FLUIDE

(30) Priorität: 25.04.2007 DE 102007019871
(43) Veröffentlichungstag der Anmeldung: 03.02.2010
(73) Patentinhaber: Theodor Hymmen Verwaltungs GmbH, 33613 Bielefeld (DE)
(72) Erfinder: PANKOKE, René, 33739 Bielefeld (DE)
(74) Vertreter: Dantz, Jan Henning
(86) Internationale Anmeldenummer: PCT/EP2008/054988
(87) Internationale Veröffentlichungsnummer: WO 2008/132126

(56) Entgegenhaltungen:
- EP-A2- 0 730 914
- WO-A1-01/96689
- GB-A- 1 260 250
- US-A- 3 936 541
- US-A- 5 565 260
- US-A- 5 961 903
- US-A1- 2004 086 678
- US-A1- 2004 099 388
- DATABASE WPI Week 199627 Thomson Scientific, London, GB; AN 1996-263249 XP002506476 & JP 08 108512 A (DAINIPPON PRINTING CO LTD) 30. April 1996 (1996-04-30)
- DATABASE WPI Week 197706 Thomson Scientific, London, GB; AN 1977-10140Y XP002506477 & JP 51 149358 A (FUKUBI KAGAKU KOGYO KK) 21. Dezember 1976 (1976-12-21)
- DATABASE WPI Week 199209 Thomson Scientific, London, GB; AN 1992-069813 XP002506478 & JP 04 014449 A (DAINIPPON PRINTING CO LTD) 20. Januar 1992 (1992-01-20)

## Beschreibung

Die vorliegende Erfindung betrifft ein Verfahren und eine Vorrichtung zur Beschichtung einer Platte mit einem fließfähigem Medium in Form eines flüssigen Lackes.

Es gibt viele verschiedene Anwendungsbereiche, bei denen ein plattenförmiger Werkstoff, z.B. eine Spanplatte oder eine Faserplatte (MDF- bzw. HDF-Platte), mit einer dekorativen Beschichtung und abschließend mit einer strukturierten Oberfläche versehen wird. Ein Beispiel dafür ist die Erzeugung von beschichteten Spanplatten mit gedruckten und melaminharzimprägnierten Papieren, die z.B. mit einer Holzdekornachbildung oder einem Steinfliesenmuster bedruckt sind und anschließend in einer Presse durch ein strukturiertes Prägeblech mit einer strukturierten Oberfläche versehen werden.

Ein anderes Verfahren zur Erzeugung einer dekorativen Beschichtung eines plattenförmigen Werkstoffs und einer strukturierten Oberfläche ist die flüssige Beschichtung und das Direktdruckverfahren. Hier wird in mehreren Schichten auf eine Holzwerkstoffplatte Lack, der anschließend ausgehärtet wird, aufgetragen. Auf die sogenannten Grundlackschichten wird dann mit Hilfe einer Direktdruckmaschine (zur Steuerung siehe DE 103 58 190 A1, (Direkte Synchronpore) DE 103 60 187.2, (Druckmaschine) DE 103 34 983 B4, (Druckmaschine) DE 10 2004 011 229.0) auf die unteren Lackschichten ein dekorativer Druck in einer oder mehreren Farben aufgetragen. Die Oberfläche wird mittels einer meist UV-aushärtenden Lackschicht versiegelt.

Verschiedene Varianten der oben beschriebenen Verfahren sind bekannt, bei denen z.B. ein bedrucktes Papier mit einer Lackschicht oder auf eine gedruckte Oberfläche eine Synchronstruktur aufgebracht wird (vgl. DE 103 60 187.2) versehen wird.

Ein ähnliches Verfahren zum Beschichten von Metallfolien ist aus der US 5,565,260 bekannt.

Bei den oben beschriebenen Verfahren wird die strukturierte Oberfläche entweder durch einen Melaminfilm in einer Presse mit Hilfe eines Prägebleches als Werkzeug oder einer Doppelbandpresse mit Hilfe eines Prägestahlbandes als Werkzeug ausgehärtet und strukturiert. In dem genannten Alternativmodell einer lackierten und gedruckten Oberfläche ist die bisherige Möglichkeit zur Strukturierung, insbesondere zur Strukturierung mit großer Strukturtiefe, noch unzureichend.

Eine strukturierte Oberfläche kann mit Hilfe einer Direktdruckmaschine im sogenannten indirekten Tiefdruck aufgebracht werden (vgl. DE 20 2004 018 710 U1). Diese Möglichkeit der Strukturierung der Oberfläche bietet sich dann an, wenn eine sehr feine Struktur im Bereich von 10 µm oder weniger erzielt werden soll. Außerdem ist die Struktur eine sogenannte "negative Pore", bei der eine Nachbildung einer Holzpore nicht in die Oberfläche hineingeht, sondern positiv nach oben aufgelegt wird. Daher der Ausdruck "negative Pore" (doppelte Verneinung).

Es ist bisher kein Verfahren bekannt, bei dem auf eine direktgedruckte Oberfläche oder eine mit einem bedruckten Papier beschichtete Oberfläche mit einem flüssigen Material, insbesondere einem durch UV-Strahlen oder Elektronenstrahlen aushärtenden Lacksystem eine strukturierte Oberfläche geschaffen werden kann, die eine größere Tiefenstruktur als die oben genannten 10 - max. 20 µm erzielt.

Des weiteren gibt es als Stand der Technik das Flexodruckverfahren, bei dem im Gegensatz zum Tiefdruckverfahren die zu druckenden Flächen erhaben auf der Flexodruckwalze stehen. Dies ist vergleichbar mit dem sogenannten Kartoffeldruck, mit dem Kinder gerne experimentieren, in dem sie einen zu druckenden Buchstaben aus einer durchgeschnittenen rohen Kartoffel herausschneiden und ihn wie einen Stempel verwenden. Dagegen wird beim Tiefdruckverfahren eine Näpfchenstruktur in die Tiefdruck(stahl)walze gebracht. Diese Näpfchen werden über einen Farbauftrag mit der Druckfarbe gefüllt, und alle erhabenen Stellen, an denen sich keine Näpfchen befinden, werden üblicherweise mit einem mechanischen Rakel abgerakelt, so dass an dieser Stelle keine Farbe übertragen wird. Diese beiden Druckverfahren sind zum Hintergrund und zur Abgrenzung der vorliegenden Erfindung hier kurz erläutert.

Die vorliegende Erfindung stellt sich vor dem Hintergrund des oben beschriebenen Standes der Technik zur Aufgabe, ein Verfahren und eine Vorrichtung zur Erzeugung einer dreidimensional strukturierten Oberfläche zu schaffen, mit der eine Strukturtiefe von deutlich mehr als 10 Mikrometer (µm) mit einem flüssigen Medium, strahlungsaushärtenden oder lufttrocknenden Lacksystem erzeugt werden kann, insbesondere mit einem UV-aushärtenden oder Elektronenstrahl-aushärtenden Lacksystem.

Diese Aufgabe wird mit einem Verfahren mit den Merkmalen des Anspruches 1 und einer Vorrichtung mit den Merkmalen des Anspruches 8 gelöst.

Die Strukturtiefe der zu erzeugenden Oberfläche kann mit dem vorliegenden erfindungsgemäßen Verfahren und der vorliegenden erfindungsgemäßen Vorrichtung in einem Bereich von 5 - 500 Mikrometer Strukturtiefe liegen, vorzugsweise 10 - 50 µm.

Vorzugsweise wird mit Hilfe eines Zwei- oder Drei-Walzen-Auftrages die entsprechend gewünschte Struktur durch den Lack flüssig auf den zu beschichtenden plattenförmigen Werkstoff aufgetragen und anschließend in einer Strahlenquelle, vorzugsweise einer UV-Strahlenquelle oder einer Lösungsmittel-Trocknungseinheit, z.B. einem Luftgebläsetrockner, ausgehärtet. Die Tixotropie des Lackes ist dabei so gewählt, dass eine aufgetragene dreidimensionale Struktur bis zur Aushärtung nicht verläuft.

Die Erfindung wird nachfolgend anhand mehrerer Ausführungsbeispiele mit Bezug auf die beigefügten Zeichnungen erläutert. Es zeigen:
- Figur 1: eine schematische Ansicht eines ersten Ausführungsbeispieles einer erfindungsgemäßen Vorrichtung;
- Figur 2: eine weitere Ansicht der Vorrichtung der Figur 1;
- Figur 3: eine Detailansicht eines mit der Vorrichtung der Figur hergestellten Produktes;
- Figur 4: eine Ansicht eines modifizierten Ausführungsbeispieles einer erfindungsgemäßen Vorrichtung;
- Figur 5: eine Ansicht eines weiteren modifizierten Ausführungsbeispieles einer erfindungsgemäßen Vorrichtung.

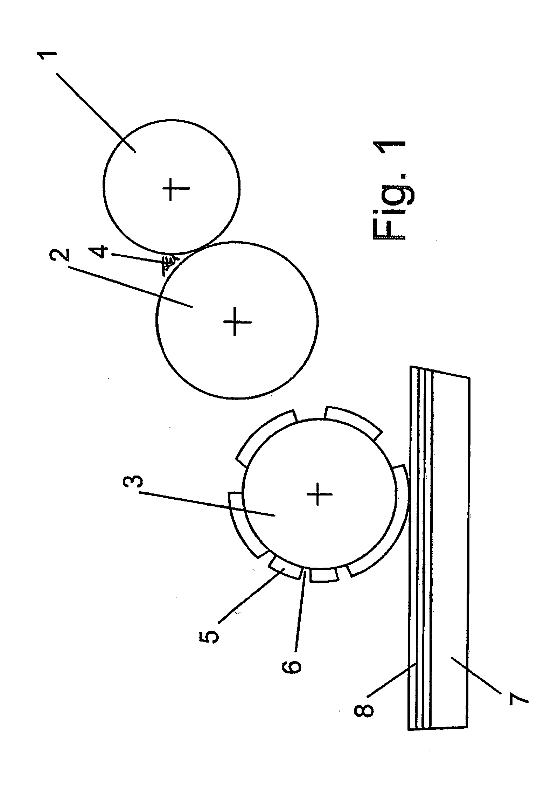

**Figur 1** zeigt eine Vorrichtung zur Beschichtung eines plattenförmigen Werkstückes, bei der sich zwischen den Walzen 1 und 2 in dem Walzenspalt eine Lackvorlage 4 befindet. Die Walzen 1 und 2 sind glatt ausgestaltet, wobei vorzugsweise eine der beiden Walzen aus einem harten Material, z.B. Stahl oder verchromtem Stahl, besteht, und die andere Walze aus einem weicheren Material, z.B. gummiert, ist. Die Walze 3 besteht vorzugsweise aus einem harten Kern und einer weichen, z.B. gummierten, Oberfläche, in die die gewünschte Struktur negativ eingraviert ist. Im Unterschied zum oben erwähnten Flexodruckverfahren, bei dem die herausragenden gummierten Teile 5 der Walze 3 in Figur 1 mit Farbe beauftragt werden und die tiefer eingearbeiteten Bereiche 6 der Walze 3 in Figur 1 durch ihre Tiefe nicht mit Farbe beaufschlagt werden und somit auch zu keiner Farb- oder Lackübertragung auf den zu beschichtenden plattenförmigen Werkstoff führen, wird in erfindungsgemäßen Verfahren und bei der erfindungsgemäßen Vorrichtung genau das Gegenteil erreicht: Hier wird die größere Menge an Lack über die tiefer eingravierten Bereiche 6 der Walze 3 übertragen, während immer noch ein geringerer Übertrag von Lack auch bei den höher stehengelassenen Teilen 5 der Walze 3 erzielt wird. Damit wird im Gegensatz zum Flexodruckverfahren die gesamte Oberfläche des plattenförmigen Werkstückes beschichtet, allerdings mit variierenden Mengen und dadurch mit einer 3-dimensionalen Struktur.

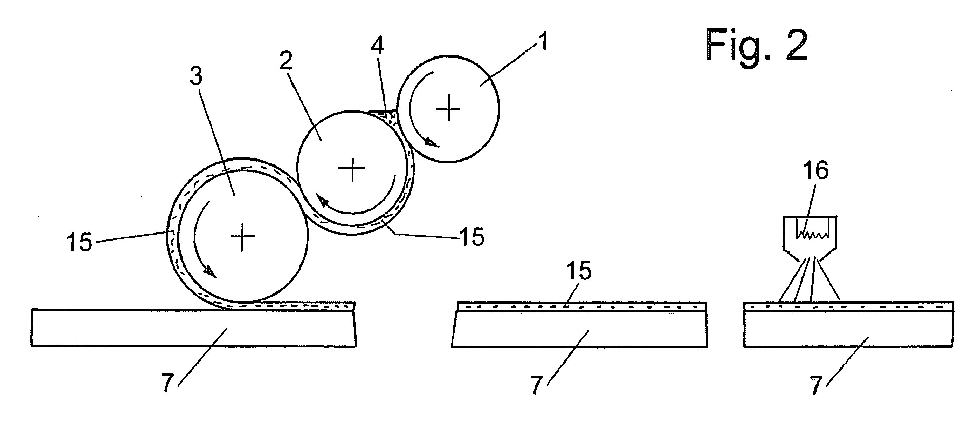

**Figur 2** erläutert noch einmal den Weg des Lackes in der 3-Walzen-Beschichtung: Die Lackvorlage befindet sich zwischen der Dosierwalze 1 und der Übertragungswalze 2 in dem Walzenspalt 4. Die besonders dicke Lackschicht wird durch die rotierenden Walzen über die Übertragungswalze auf dem Weg 15 auf die Druckwalze 3 übertragen und beschichtet damit dann die Platte 7. Im Anschluß an die Beschichtung der Platte 7 wird der entsprechend aufgetragene Lack unter einer Strahlungsquelle 16 ausgehärtet.

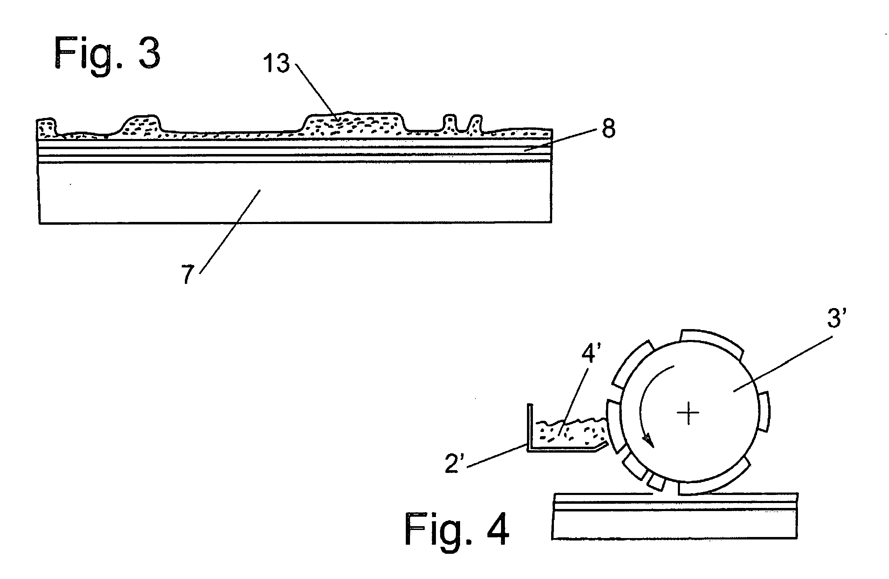

Bei dem erfindungsgemäßen Herstellungsverfahren ergibt sich im Anschluß eine Struktur, die in **Figur 3** nochmals dargestellt wird. Mit dem Bezugszeichen 7 ist der zu beschichtende plattenförmige Werkstoff bezeichnet, auf den in mehreren Schichten Lack- und Druckfarbe für eine Dekor-Nachbildung, z.B. eine Holzstruktur oder eine Nachbildung von Steinen oder Fliesen, im herkömmlichen Verfahren aufgedruckt und aufgetragen worden sind und anschließend mit der erfindungsgemäßen Vorrichtung die oberste Lackschicht 13 in der dargestellten dreidimensional strukturierten Ausprägung vorgenommen worden ist. Die strukturierte Lackschicht 13 kann ein identisches Lackmaterial sein, welches auch im darunterliegenden Aufbau 8 bereits ein- oder mehrmals in einer oder mehreren Schichten aufgetragen worden ist, wodurch sich eine bessere Verbindung der untenliegenden Schichten 8 mit der zuletzt aufgetragenen, durch das erfindungsgemäße Verfahren strukturierten Lackschicht 13 ergibt.

Eine alternative Ausgestaltung der Vorrichtung ist in **Figur 4** dargestellt. Es ist eine gravierte Auftragswalze 3' und ein Lackvorratstank 2' vorgesehen, in dem ein z.B. UVaushärtender Lack sich befindet und die gegen die Walze 3' eine offene Seite hat, so dass durch Drehung der Walze 3' der im Vorratstank befindliche Lack 4' auf die Walze übertragen werden kann. Dabei kann der Lackvorratstank 2' auch gegen die Walze 3' verfahrbar gelagert sein, um eine Variation der Auftragsmenge zu erzielen.

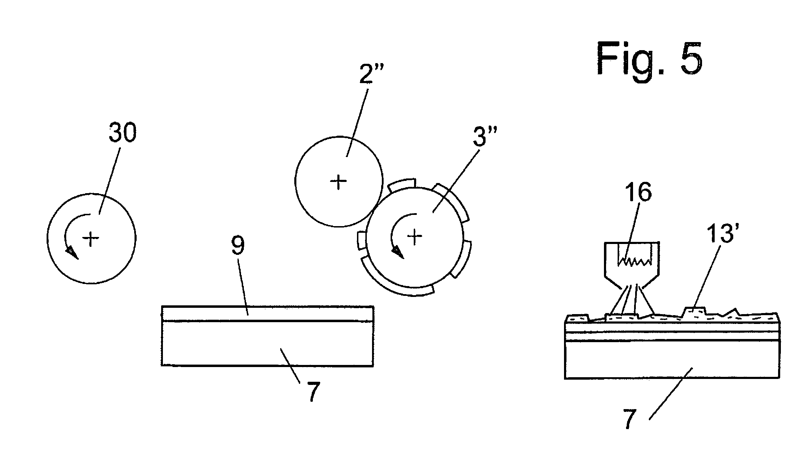

In **Figur 5** ist eine modifizierte Vorrichtung zum Auftragen einer fließfähigen Beschichtung dargestellt. Eine erste Auftragswalze 30 bringt eine erste Lackschicht 9 auf ein plattenförmiges Werkstück 7 auf. Bei Bedarf können auch mehrere Auftragswalzen 30 bei einer mehrschichtigen Beschichtung vorgesehen sein. Das plattenförmige Werkstück 7 wird anschließend mit noch feuchter und nicht ausgehärteter Lackschicht zu einer Beschichtungsstation transportiert, die eine Walze 2" und eine Auftragswalze 3" umfasst. Durch die Auftragswalze 3" wird eine strukturierte oberste Lackschicht 13' aufgebracht, die dann an einer Aushärtungs- und Trocknungsstation 16 fixiert wird. Der Auftrag der obersten Lackschicht 13' kann dabei wie bei den vorangegangenen Ausführungsbeispielen ausgebildet sein.

Bei den beschriebenen Ausführungsbeispielen wurde das Aufbringen der strukturierten Beschichtung 13 auf das plattenförmige Werkstück erläutert. Es ist natürlich möglich, das plattenförmige Werkstück vor dem Beschichten mit einem Dekorbild zu bedrucken, vorzugsweise im Digitaldruck, so dass die dreidimensionale Struktur der Beschichtung auf das Dekorbild abgestimmt werden kann.

## Patentansprüche

1. Verfahren zur Beschichtung einer Platte (7), wobei ein im sichtbaren Lichtspektrum voll oder teilweise transparentes fließfähiges Medium in Form eines flüssigen Lackes über eine gravierte Auftragswalze (3, 3', 3") dergestalt aufgetragen wird, dass die Auftragswalze (3, 3', 3") sowohl in ihren eingravierten Vertiefungen wie auch in den nicht eingravierten hochstehenden Bereichen mit dem flüssigen Lack benetzt wird und der flüssige Lack mit einer Auftragswalze (3, 3', 3") aufgetragen wird, die eine gummierte Oberfläche aufweist, in die eine Struktur negativ eingraviert ist, wobei der flüssige Lack auf der Platte eine dreidimensionalen Struktur und einer Strukturtiefe von 5 - 500 Mikrometer, vorzugsweise 10 - 50 Mikrometer aufweist und über eine Strahlenquelle ausgehärtet wird, wobei die Tixotropie des Lackes so gewählt ist, dass die aufgetragene dreidimensionale Struktur bis zur Aushärtung nicht verläuft, und der flüssige Lack direkt nach dem Auftrag mit der gravierten Auftragswalze (3, 3', 3") durch eine UV-Strahlenquelle ohne Zeitverzug ausgehärtet wird, um ein Verfließen der aufgetragenen Struktur zu verhindern.

2. Verfahren nach Anspruch 1, **dadurch gekennzeichnet, dass** der Auftrag mit dem fließfähigen Medium über eine 2-Walzen-Konstruktion oder eine 3-Walzen-Konstruktion erfolgt.

3. Verfahren nach Anspruch 1 oder 2, **dadurch gekennzeichnet, dass** der flüssige Lack nicht oder nur sehr wenig zur Farbgebung der Oberfläche beiträgt.

4. Verfahren nach einem der Ansprüche 1 bis 3, **dadurch gekennzeichnet, dass** der Übertrag des fließfähigen Mediums auf die gravierte Auftragswalze (3') durch einen neben der Auftragswalze angebrachten Lackvorratstank (2') erfolgt, der zur Fläche der Auftragswalze (3') eine offene Seite hat, so dass die Auftragswalze (3') durch das im Lackvorratstank (2') befindliche fließfähige Medium durchlaufen kann.

5. Verfahren nach Anspruch 4, **dadurch gekennzeichnet, dass** der Lackvorratstank (2') gegen die Auftragswalze (3') verfahrbar angeordnet ist, um dadurch die übertragene Menge des fließfähigen Mediums zu dosieren.

6. Verfahren nach einem der Ansprüche 1 bis 5, **dadurch gekennzeichnet, dass** vor dem Aufbringen der Beschichtung mit dreidimensionaler Struktur mit der Auftragswalze (3, 3', 3") mindestens eine weitere glatte Vorbeschichtung aufgebracht wird.

7. Verfahren nach Anspruch 6, **dadurch gekennzeichnet, dass** die strukturierte Lackschicht (13) aus einem identischen Lackmaterial besteht, welches auch im darunterliegenden Aufbau (8) bereits ein- oder mehrmals in einer oder mehreren Schichten aufgetragen worden ist.

8. Vorrichtung zur Durchführung des Verfahrens nach einem der vorhergehenden Ansprüche zur Beschichtung einer Platte (7) mit einem fließfähigen Medium mit einer dreidimensionalen Struktur und einer Strukturtiefe von 5 - 500 Mikrometer, vorzugsweise 10 - 50 Mikrometer, **dadurch gekennzeichnet, dass** der Auftrag des fließfähigen Mediums über eine gravierte Auftragswalze (3, 3', 3") dergestalt erfolgt, dass die Auftragswalze (3, 3', 3") sowohl in ihren eingravierten Vertiefungen wie auch in den (nicht eingravierten) hochstehenden Bereichen mit den fließfähigen Medium benetzt wird und die Auftragswalze (3, 3`, 3") eine gummierte Oberfläche aufweist, in die eine Struktur negativ eingraviert ist, und hinter der gravierten Auftragswalze (3, 3', 3 ") eine UV-Strahlenquelle (16) angeordnet ist.

9. Vorrichtung nach Anspruch 8, **dadurch gekennzeichnet, dass** der Auftrag mit dem fließfähigen Medium über eine 2-Walzen-Konstruktion oder eine 3-Walzen-Konstruktion erfolgt.

10. Vorrichtung nach Anspruch 8 oder 9, **dadurch gekennzeichnet, dass** der Übertrag des fließfähigen Mediums auf die gravierte Auftragswalze (3') durch einen neben der Auftragswalze angebrachten Lackvorratstank (2') erfolgt, der zur Fläche der Auftragswalze (3') eine offene Seite hat, so dass die Auftragswalze durch das im Lackvorratstank befindliche fließfähige Medium durchlaufen kann.

11. Vorrichtung nach Anspruch 10, **dadurch gekennzeichnet, dass** der Lackvorratstank (2') gegen die Auftragswalze (3') verfahrbar angeordnet ist, um dadurch die übertragene Menge des fließfähigen Mediums zu dosieren.

12. Vorrichtung nach einem der oben genannten Ansprüche 8 bis 11, **dadurch gekennzeichnet, dass** die mittlere Walze bei einem 3-Walzen-Auftrag als eine Rasterwalze mit tiefen Näpfchen ausgebildet ist, um die Übertragungsmenge genau zu dosieren.

13. Vorrichtung nach einem der oben genannten Ansprüche 8 bis 12, **dadurch gekennzeichnet, dass** vor der Auftragswalze (3') zum Aufbringen des Mediums mit dreidimensionaler Struktur (13) mindestens eine weitere Auftragswalze (30) angeordnet ist.

## Claims

1. Method for coating a sheet (7), wherein a flowing medium which is fully or partially transparent in the visible light spectrum is applied in the form of a liquid varnish via an engraved application roller (3, 3' , 3'') in such a manner that the application roller (3, 3' , 3") is wetted with the liquid varnish both in its engraved depressions and in the non-engraved protruding regions, and the liquid varnish is applied with an application roller (3, 3', 3'') which has a rubberized surface into which a structure is engraved as a negative, wherein the liquid varnish on the sheet has a three-dimensional structure and a structure depth of 5 - 500 micrometres, preferably 10 - 50 micrometres, and is cured by a source of radiation, wherein the thixotropy of the varnish is chosen such that the applied three-dimensional structure does not migrate prior to its curing and the liquid varnish is cured immediately after the application with the engraved application roller (3, 3' , 3'') ) by a UV radiation source without any time delay in order to prevent any running of the applied structure.

2. Method according to Claim 1, **characterized in that** the application with the flowing medium is carried out by a 2-roller design or a 3-roller design.

3. Method according to Claim 1 or 2, **characterized in that** the liquid varnish does not contribute or contributes only very slightly to the colouring of the surface.

4. Method according to one of Claims 1 to 3, **characterized in that** the transfer of the flowing medium onto the engraved application roller (3') is carried out by a varnish storage tank (2') which is located beside the application roller, said tank having one side which is open towards the surface of the application roller (3') such that the application roller (3') can run through the flowing medium which is located in the varnish storage tank (2') .

5. Method according to Claim 4, **characterized in that** the varnish storage tank (2') is moveably located in relation to the application roller (3'), in order to thereby dose the amount of the flowing medium which is transferred.

6. Method according to one of Claims 1 to 5, **characterized in that**, prior to the application of the coating having a three-dimensional structure with the application roller (3, 3' , 3''), at least one further smooth primary coating is applied.

7. Method according to Claim 6, **characterized in that** the structured varnish layer (13) consists of an identical varnish material to that which has already been applied once or a plurality of times in one or a plurality of layers in the underlying structure (8).

8. Device for implementing the method according to one of the preceding claims for coating a sheet (7) with a flowing medium having a three-dimensional structure and a structure depth of 5 - 500 micrometers, preferably 10 - 50 micrometers, **characterized in that** the application of the flowing medium is carried out via an engraved application roller (3, 3', 3") in such a manner that the engraved application roller (3, 3', 3") is wetted with the flowing medium both in its engraved depressions and in the (non-engraved) protruding regions, and the application roller (3, 3', 3") has a rubberized surface into which a structure is engraved as a negative, and a UV radiation source (16) is located behind the engraved application roller (3, 3', 3").

9. Device according to Claim 8, **characterized in that** the application with the flowing medium is carried out by a 2-roller design or a 3-roller design.

10. Device according to Claim 8 or 9, **characterized in that** the transfer of the flowing medium onto the engraved application roller (3') is carried out by a varnish storage tank (2') which is located beside the application roller, said tank having one side which is open towards the surface of the application roller (3') such that the application roller can run through the flowing medium which is located in the varnish storage tank.

11. Device according to Claim 10, **characterized in that** the varnish storage tank (2') is moveably located in relation to the application roller (3'), in order to thereby dose the amount of the flowing medium which is transferred.

12. Device according to one of aforementioned Claims 8 to 11, **characterized in that** the centre roller in a 3-roller-application is formed as an anilox roller having deep cells in order to dose the transfer amount precisely.

13. Device according to one of aforementioned Claims 8 to 12, **characterized in that** at least one further application roller (30) is located ahead of the application roller (3') for the application of the medium having a three-dimensional structure.

## Revendications

1. Procédé de revêtement d'une plaque (7), selon lequel un milieu fluide totalement ou partiellement transparent dans le spectre de la lumière visible est appliqué sous la forme d'une laque liquide sur un rouleau applicateur gravé (3, 3', 3'') de sorte que ce rouleau applicateur (3, 3', 3'') soit mouillé par la laque liquide aussi bien dans les creux de gravure qu'également dans les zones en relief non gravées, et la laque liquide est appliquée avec un rouleau applicateur (3, 3', 3'') qui comporte une surface caoutchoutée dans laquelle une structure est gravée en négatif, la laque liquide présentant sur la plaque une structure tridimensionnelle et une profondeur de structure de 5-500 micromètres, de préférence de 10-50 micromètres, et étant durcie par une source de rayonnement, la tixotropie de la laque étant choisie de sorte que la structure tridimensionnelle appliquée ne s'écoule pas jusqu'au durcissement, et la laque fluide étant directement durcie après l'application avec le rouleau applicateur gravé (3, 3', 3'') par une source de rayonnement U.V., sans retard pour éviter un coulage de la structure appliquée.

2. Procédé conforme à la revendication 1,
**caractérisé en ce que**
l'application avec le milieu fluide est effectuée par l'intermédiaire d'un ensemble à deux rouleaux ou d'un ensemble à trois rouleaux.

3. Procédé conforme à la revendication 1 ou 2,
**caractérisé en ce que**
la laque liquide ne contribue pas ou seulement très peu à la coloration de la surface.

4. Procédé conforme à l'une des revendications 1 à 3,
**caractérisé en ce que**
le transfert du milieu fluide sur le rouleau applicateur gravé (3') est effectué par l'intermédiaire d'un réservoir de laque (2') monté à proximité du rouleau applicateur, qui a un côté ouvert vers la surface du rouleau applicateur (3') de sorte que ce rouleau applicateur (3') puisse pénétrer dans le milieu fluide situé dans le réservoir de laque (2').

5. Procédé conforme à la revendication 4,
**caractérisé en ce que**
le réservoir de laque (2') est monté de façon à pouvoir être déplacé par rapport au rouleau applicateur (3') pour permettre ainsi de doser la quantité de milieu fluide transférée.

6. Procédé conforme à l'une des revendications 1 à 5,
**caractérisé en ce qu'**
avant l'application du revêtement ayant une structure tridimensionnelle avec le rouleau applicateur (3, 3', 3'') au moins un autre pré-revêtement lisse est appliqué.

7. Procédé conforme à la revendication 6,
**caractérisé en ce que**
la couche de laque structurée (13) est constituée d'un matériau de laque identique à celui ayant déjà été appliqué sur la structure (8) située en-dessous, une ou plusieurs fois et selon une ou plusieurs couches.

8. Dispositif permettant la mise en oeuvre du procédé conforme à l'une quelconque des revendications précédentes pour permettre de revêtir une plaque (7) avec un milieu fluide avec une structure tridimensionnelle et une profondeur de structure de 5 à 500 micromètres, de préférence de 10 à 50 micromètres,
**caractérisé en ce que**
l'application du milieu fluide est effectuée avec un rouleau applicateur gravé (3, 3', 3") de sorte que ce rouleau applicateur (3, 3', 3") soit mouillé par le milieu fluide aussi bien dans ses parties gravées en creux que dans ses zones en relief n'ayant pas été gravées, et le rouleau applicateur (3, 3', 3") comporte une surface caoutchoutée dans laquelle est gravée une structure en négatif, et, en arrière du rouleau applicateur gravé (3, 3', 3") est montée une source de rayonnement U.V. (16).

9. Dispositif conforme à la revendication 8,
**caractérisé en ce que**
l'application avec le milieu fluide est effectuée par un ensemble à deux rouleaux ou un ensemble à trois rouleaux.

10. Dispositif conforme à la revendication 8 ou 9,
**caractérisé en ce que**
l'application du milieu fluide sur le rouleau applicateur gravé (3') est effectuée par l'intermédiaire d'un réservoir de laque (2') monté à proximité du rouleau applicateur, qui comporte un côté ouvert vers la surface du rouleau applicateur (3') de sorte que ce rouleau applicateur puisse pénétrer dans le milieu fluide situé dans le réservoir de laque.

11. Dispositif conforme à la revendication 10,
**caractérisé en ce que**
le réservoir de laque (2') est monté mobile par rapport au rouleau applicateur (3') pour pouvoir ainsi doser la quantité de milieu fluide appliquée.

12. Dispositif conforme à l'une des revendications précédentes 8 à 11,
**caractérisé en ce que**
dans le cas d'une application avec trois rouleaux, le rouleau médian est réalisé sous la forme d'un rouleau à trame avec des petits godets profonds pour permettre de doser précisément la quantité appliquée.

13. Dispositif conforme à l'une des revendications susmentionnées 8 à 12,
**caractérisé en ce qu'**
en amont du rouleau applicateur (3') est monté au moins un autre rouleau applicateur (30) pour permettre d'appliquer le milieu avec une structure tridimensionnelle (13).
